# EUROPEAN PATENT APPLICATION

(11) **EP 4 622 171 A1**
(43) Date of publication of application: **24.09.2025**
(21) Application number: 23899576.5
(22) Date of filing: 07.10.2023
(51) Int. Cl.: H04L 9/40

(54) **ACCESS CONTROL SYSTEM, METHOD AND COMPUTING DEVICE CLUSTER**

(30) Priority: 09.12.2022 CN 202211584052
(71) Applicant: Huawei Cloud Computing Technologies Co., Ltd., Guiyang, Guizhou 550025 (CN)
(72) Inventor: ZHU, Xiaoping, Guiyang, Guizhou 550025 (CN)
(74) Representative: Pfenning, Meinig & Partner mbB
(86) International application number: PCT/CN2023/123232
(87) International publication number: WO 2024/119993

(57) **Abstract**

This application discloses an access control system and method, and a computing device cluster. The system includes a first host and a second host. The first host is configured to: deploy and start a first service, and send, to the second host, a packet for the first service to access a second service, where a source address of the packet is a first IPv6 address and a destination port is a first port on the second host. The second host is configured to: deploy and start the second service, and control the second service to monitor the first port. The second host is further configured to: receive the packet from the first host, determine that an identifier that is of the first service and that is included in the first IPv6 address matches a security rule of the second service, and transfer the packet to the first port, where the security rule of the second service includes an identifier indicating that access to the second service is allowed. This resolves problems that a security boundary of a service is difficult to maintain and a frequency of updating a security rule by a network controller is high.

## Description

### CROSS-REFERENCE TO RELATED APPLICATIONS

This application claims priority to Chinese Patent Application No. 202211584052.9, filed with the China National Intellectual Property Administration on December 9, 2022 and entitled "ACCESS CONTROL SYSTEM AND METHOD, AND COMPUTING DEVICE CLUSTER", which is incorporated herein by reference in its entirety.

### TECHNICAL FIELD

This application relates to the field of computer technologies, and in particular, to an access control system and method, and a computing device cluster.

### BACKGROUND

A security group (security group, SG) is a collection of some security rules. In a cloud environment, one security group can be referenced by one or more hosts. A user may use the security group to define a security boundary of each service (service) deployed on each of the one or more hosts. In other words, services that reference a same security group may be classified into a same service set. An interval between different service sets is a security boundary between any services included in the different service sets. For example, a host 1 and a host 2 reference a security group 1, and a host 3 references a security group 2. A service 1 deployed on the host 1 and a service 2 deployed on the host 2 may be classified into a service set 1, and a service 3 deployed on the host 3 may be classified into a service set 2. An interval between the service set 1 and the service set 2 is a security boundary between the service 1 or the service 2 included in the service set 1 and the service 3 included in the service set 2. The user may also configure a security rule in the security group to implement access control of each service deployed on each of the one or more hosts. In other words, different security rules configured for the security group may be specific to different services that reference the security group. For example, a security rule 1 in the security group 1 allows a service 4 deployed on a host 4 to access a port 1 monitored by the service 1. To be specific, an internet protocol (internet protocol, IP) address of the host 4 is a source address of the security rule 1, and the port 1 is a destination port of the security rule 1. An IP address of a host 5 is a source address of a security rule 2. Because the host 1 references the security group 1, when the service 1 deployed on the host 1 receives a packet from the service 4, access control of the service 1 can be implemented by determining whether a source address and a destination port of the packet respectively match the source address and the destination port of the security rule 1.

Because any security rule in a security group may allow one or more services deployed on one or more hosts that reference the security group to access a port, a source address of the security rule may be an IP address of the one or more hosts that reference the security group. If the hosts that reference the security group change, for example, a host that references the security group is newly added, a network controller configured to manage the services deployed on the hosts needs to send the security rule in the security group to the newly-added host, update the referenced security rule when determining that a source address of any security rule in the security group is the IP address of the one or more hosts that reference the security group, and send an updated security rule to the one or more hosts in the security group.

It can be learned that, if hosts that reference a security group frequently change, services that are classified into a same service set by referencing the security group frequently change, and security boundaries of the services frequently change and are difficult to maintain. Consequently, a frequency of updating a security rule by a network controller is high, and pressure of the network controller is high.

### SUMMARY

Embodiments of this application provide an access control system and method, and a computing device cluster, to resolve problems that a security boundary of a service is difficult to maintain and a network controller updates a security rule at a high frequency.

According to a first aspect, an embodiment of this application provides an access control system. The access control system includes a first host and a second host. The first host may deploy and start a first service, and send, to the second host, a packet for the first service to access a second service, where a source address of the packet is a first internet protocol version 6 IPv6 address and a destination port is a first port on the second host, the first IPv6 address includes a prefix, location information, and host information, the prefix is used to define a type of the first IPv6 address, the location information is used to route the packet, and the host information includes an identifier of the first host and an identifier of the first service. The second host may deploy and start the second service, and control the second service to monitor the first port. The second host may further receive the packet from the first host, determine that the identifier that is of the first service and that is included in the first IPv6 address matches a security rule of the second service, and transfer the packet to the first port, where the security rule of the second service includes an identifier indicating that access to the second service is allowed.

Based on the foregoing system, when the first service on the first host accesses the second service on the second host, the source address of the packet sent by the first host to the first port on the second host may include the identifier of the first service, and the security rule of the second service that monitors the first port may include the identifier indicating that access to the second service is allowed, the second host may implement access control by determining whether the identifier of the first service matches the identifier indicating that access to the second service is allowed. A security boundary of a service is defined by using an identifier of a service instead of an IP address of a host. To be specific, same services deployed on different hosts may be classified into a same service set, and security rules of the services in the same service set are irrelevant to the IP address of the host. In this case, if a host on which a service is deployed changes, a security boundary of the service does not change, so that maintenance of the security boundary of the service can be simplified. In addition, a network controller does not need to update the security rule of the service, so that a frequency of updating the security rule is reduced, and implementation of the network controller is simplified.

In a possible design, in the first IPv6 address, the location information is located after the prefix.

In a possible design, the location information is from a 37^{th} bit to an 80^{th} bit.

According to this design, in the first IPv6 address, a 1^{st} bit to a 36^{th} bit may be used to record the prefix used to define the type of the first IPv6 address, and the 37^{th} bit to the 80^{th} bit may be used to record the location information used to route the packet. In this way, when matching the identifier of the first service in the first IPv6 address with the security rule of the second service, the second host may directly read information other than the 1^{st} bit to the 80^{th} bit in the first IPv6 address to determine the identifier of the first service, and use exact matching to improve matching efficiency, so that access control efficiency can be improved.

In a possible design, in the first IPv6 address, the host information is located after the location information.

In a possible design, the host information is from an 81^{st} bit to a 128^{th} bit.

According to this design, in the first IPv6 address, the 81^{st} bit to the 128^{th} bit may be used to record the host information including the identifier of the first host and the identifier of the first service. In this way, when matching the identifier of the first service in the first IPv6 address with the security rule of the second service, the second host may directly read information about the 81^{st} bit to the 128^{th} bit in the first IPv6 address to determine the identifier of the first service, and use exact matching to improve matching efficiency, so that access control efficiency can be improved.

In a possible design, in the host information, the identifier of the first service is located after the identifier of the first host.

In a possible design, the identifier of the first host is from the 81^{st} bit to a 104^{th} bit, and the identifier of the first service is from a 105^{th} bit to a 120^{th} bit.

According to this design, in the host information of the first IPv6 address, the 81^{st} bit to the 104^{th} bit may be used to record the identifier of the first host, and the 105^{th} bit to the 120^{th} bit may be used to record the identifier of the first service. In this way, when matching the identifier of the first service in the first IPv6 address with the security rule of the second service, the second host may directly read information about the 105^{th} bit to the 120^{th} bit in the first IPv6 address to determine the identifier of the first service, and use exact matching to improve matching efficiency, so that access control efficiency can be improved.

In a possible design, before deploying and starting the first service, the first host may further receive the identifier of the first service and a security rule of the first service from a network controller, where the network controller is configured to manage a service deployed on the first host and a service deployed on the second host, and the security rule of the first service includes an identifier indicating that access to the first service is allowed.

According to this design, before deploying and starting the first service, the first host may receive the identifier of the first service and the security rule of the first service from the network controller, and may further implement access control based on the identifier of the first service and the security rule of the first service after deploying and starting the first service. Access control of a service is implemented by using an identifier of the service included in a security rule of the service, so that a change of a host on which the service is deployed does not cause a network controller to update the security rule of the service.

In a possible design, before deploying and starting the second service, the second host may further receive an identifier of the second service and the security rule of the second service from a network controller, where the network controller is configured to manage a service deployed on the first host and a service deployed on the second host.

According to this design, before deploying and starting the second service, the second host may receive the identifier of the second service and the security rule of the second service from the network controller, and may further implement access control based on the identifier of the second service and the security rule of the second service after deploying and starting the second service. Access control of a service is implemented by using an identifier of the service included in a security rule of the service, so that a change of a host on which the service is deployed does not cause a network controller to update the security rule of the service.

In a possible design, the first host may send, to the second host in the following manner, the packet for the first service to access the second service: controlling the first service to set the first IPv6 address as the source address of the packet, controlling the first service to monitor a second port, and sending the packet to the second host through the second port.

According to this design, after deploying and starting the first service, the first host may control the first service to set the first IPv6 address including the identifier of the first service as a source address of a packet for the first service to access another service. Different services are controlled set different addresses as source addresses of packets for the services to access other services. Access control of a service is implemented by using an identifier of service included in a source address, so that a change of a host on which the service is deployed does not cause a network controller to update a security rule of the service. In addition, the source addresses of the packets that are set by different services and that are used to access other services have different service identifiers, but may have a same network segment, so that a plurality of services can be deployed on one host, to improve resource utilization.

According to a second aspect, an embodiment of this application provides an access control method. The method includes: A second host deploys and starts a second service, and controls the second service to monitor a first port; the second host receives a packet that is from a first host and that is for a first service to access the second service, where a source address of the packet is a first internet protocol version 6 IPv6 address and a destination port is the first port, the first IPv6 address includes a prefix, location information, and first host information, the prefix is used to define a type of the first IPv6 address, the location information is used to route the packet, and the first host information includes an identifier of the first host and an identifier of the first service; and the second host determines that the identifier that is of the first service and that is included in the first IPv6 address matches a security rule of the second service, and transfers the packet to the first port, where the security rule of the second service includes an identifier indicating that access to the second service is allowed.

In a possible design, in the first IPv6 address, the location information is located after the prefix.

In a possible design, the location information is from a 37^{th} bit to an 80^{th} bit.

In a possible design, in the first IPv6 address, the first host information is located after the location information.

In a possible design, the host information is from an 81^{st} bit to a 128^{th} bit.

In a possible design, in the host information, the identifier of the first service is located after the identifier of the first host.

In a possible design, the identifier of the first host is from the 81^{st} bit to a 104^{th} bit, and the identifier of the first service is from a 105^{th} bit to a 120^{th} bit.

In a possible design, before deploying and starting the second service, the second host may further receive an identifier of the second service and the security rule of the second service from a network controller, where the network controller is configured to manage a service deployed on the first host and a service deployed on the second host.

In a possible design, after deploying and starting the second service, the second host may further control the second service to set a second IPv6 address as a source address of a packet for the second service to access another service, where the second IPv6 address includes a prefix, location information, and second host information, and the second host information includes an identifier of the second host and the identifier of the second service.

According to a third aspect, this application further provides a computing device cluster, including at least one computing device. A structure of each computing device includes a processor and a memory. The processor is configured to support a second host in performing the method according to any one of the second aspect or the possible designs of the second aspect. The memory is coupled to the processor, and stores program instructions and data that are necessary for the communication apparatus. The structure of the communication apparatus further includes a communication interface, configured to communicate with another device.

According to a fourth aspect, this application further provides a computer-readable storage medium, where the computer-readable storage medium includes computer program instructions, and when the computer program instructions are executed by a computing device cluster, the computing device cluster is enabled to perform the method according to any one of the second aspect or the possible designs of the second aspect.

According to a fifth aspect, this application further provides a computer program product including instructions. When the instructions are run by a computing device cluster, the computing device cluster is enabled to perform the method according to any one of the second aspect or the possible designs of the second aspect.

According to a sixth aspect, this application further provides a chip. The chip may be coupled to a memory, and is configured to invoke a computer program stored in the memory and perform the method according to any one of the second aspect or the possible designs of the second aspect.

For beneficial effects of the second aspect to the sixth aspect and the possible designs of the second aspect to the sixth aspect, refer to the foregoing descriptions of beneficial effects of the method according to any one of the first aspect and the possible designs of the first aspect.

### BRIEF DESCRIPTION OF DRAWINGS

FIG. 1 is a diagram of a security boundary of a service according to an embodiment of this application;
FIG. 2 is a diagram of a security group according to an embodiment of this application;
FIG. 3 is a diagram of a security rule according to an embodiment of this application;
FIG. 4 is a diagram of a service access control scenario according to an embodiment of this application;
FIG. 5 is a diagram of another service access control scenario according to an embodiment of this application;
FIG. 6 is a diagram of a structure of an access control system according to an embodiment of this application;
FIG. 7 is a schematic flowchart of an access control method according to an embodiment of this application;
FIG. 8 is a diagram of a first IPv6 address according to an embodiment of this application;
FIG. 9 is a diagram of another first IPv6 address according to an embodiment of this application;
FIG. 10 is a diagram of still another service access control scenario according to an embodiment of this application;
FIG. 11 is a diagram of a structure of a first host according to an embodiment of this application;
FIG. 12 is a diagram of a structure of a computing device according to an embodiment of this application;
FIG. 13 is a diagram of a structure of a computing device cluster according to an embodiment of this application; and
FIG. 14 is a diagram of a connection manner between computing device clusters according to an embodiment of this application.

### DESCRIPTION OF EMBODIMENTS

To make objectives, technical solutions, and advantages of embodiments of this application clearer, the following clearly describes the technical solutions in embodiments of this application with reference to the accompanying drawings in embodiments of this application.

The following describes some terms in embodiments of this application, to facilitate understanding of embodiments of this application.
(1) In embodiments of this application, "at least one" means one or more, and "a plurality of" means two or more. In addition, it should be understood that in descriptions of this specification, words such as "first" and "second" are merely intended for purposes of description, and should not be understood as expressing or implying relative importance or a sequence. For example, a first object and a second object do not represent importance or a sequence of the first object and the second object, but are merely used for distinguishing and description. A term "and/or" in embodiments of this application describes only an association relationship and represents that three relationships may exist. For example, A and/or B may represent the following three cases: Only A exists, both A and B exist, and only B exists. In addition, the character "/" in this specification generally indicates an "or" relationship between the associated objects.

In the descriptions of embodiments of this application, it should be noted that terms "installation" and "connection" should be understood in a broad sense unless there is a clear stipulation and limitation. For example, "connection" may be a detachable connection, a non-detachable connection, a direct connection, or an indirect connection through an intermediate medium. Orientation terms mentioned in embodiments of this application, for example, "up", "down", "left", "right", "inside", "outside", are merely directions in the accompanying drawings. Therefore, the orientation terms are used to better and more clearly describe and understand embodiments of this application, instead of indicating or implying that a specified apparatus or element needs to have a specific orientation, and be constructed and operated in the specific orientation. Therefore, this cannot be understood as a limitation on embodiments of this application. "A plurality of" means at least two.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

(2) Network access control (network access control, NAC)

Network access control allows or denies access from a source address to a destination address by configuring an access control rule at a network layer. The access control rule includes a protocol, a source address, a source port, a destination address, and a destination port.

(3) Microservice, micro-segmentation, and micro-isolation

A microservice is a deployment mode of a service. Generally, a service is defined in a hierarchy from a service to a microservice group to a microservice. Each service may include a plurality of microservice groups, and each microservice group may include a plurality of microservices. When defining a security boundary of a service, the security boundary may be a service granularity or a microservice granularity. After defining the security boundary of the service, a security rule may be configured on a security boundary of the service, to implement micro-segmentation and micro-isolation of the service.

(4) Security group (security group, SG)

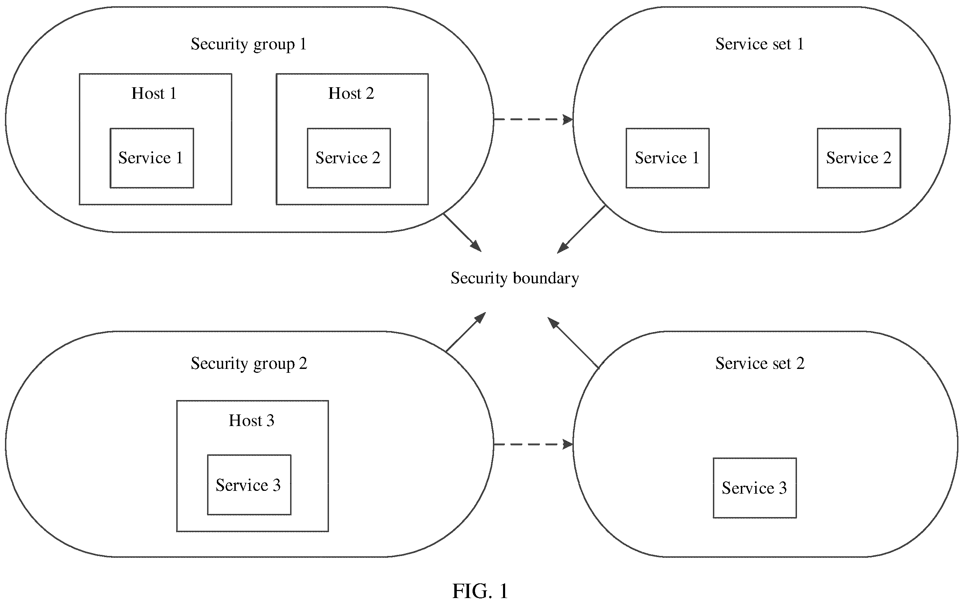

A security group is a collection of security rules. In a cloud environment, one security group can be referenced by one or more hosts. A user may use the security group to define a security boundary of each service deployed on each of the one or more hosts. In other words, services that reference a same security group may be classified into a same service set. An interval between different service sets is a security boundary between any services included in different service sets. For example, FIG. 1 is a diagram of a security boundary of a service according to an embodiment of this application. As shown in FIG. 1, a service 1 is deployed on a host 1, a service 2 is deployed on a host 2, a service 3 is deployed on a host 3. The host 1 and the host 2 reference a security group 1, and the host 3 references the security group 2. In this case, the service 1 deployed on the host 1 and the service 2 deployed on the host 2 may be classified into a service set 1, and the service 3 deployed on the host 3 may be classified into a service set 2. An interval between the security group 1 and the security group 2 is an interval between the service set 1 and the service set 2, that is, a security boundary between the service 1 or the service 2 included in the service set 1 and the service 3 included in the service set 2.

The user may also configure a security rule in the security group to implement access control of each service deployed on each of the one or more hosts. In other words, different security rules configured for the security group may be specific to different services that reference the security group. For example, a security rule 1 in the security group 1 allows a service 4 deployed on a host 4 to access a port 1 monitored by the service 1. To be specific, an internet protocol (internet protocol, IP) address of the host 4 is a source address of the security rule 1, and the port 1 is a destination port of the security rule 1. Because the host 1 references the security group 1, when the service 1 deployed on the host 1 receives a packet from the service 4, access control of the service 1 can be implemented by determining whether a source address and a destination port of the packet respectively match the source address and the destination port of the security rule 1.

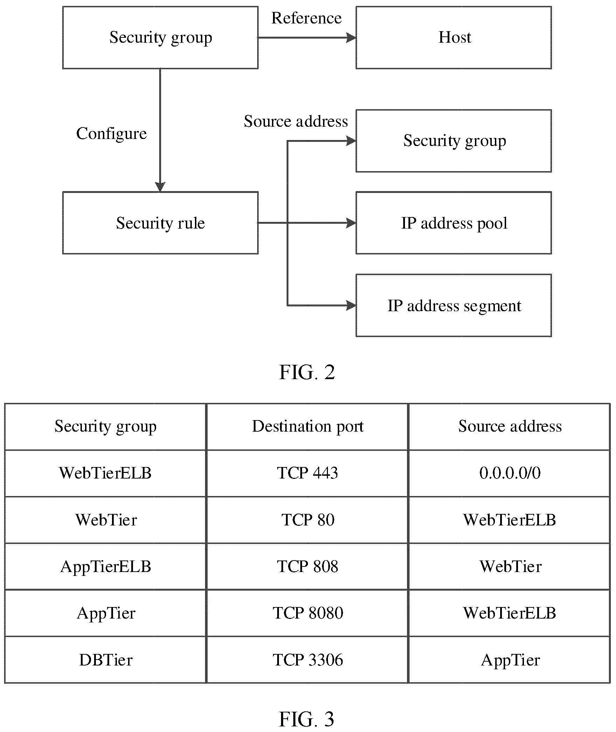

For example, FIG. 2 is a diagram of a security group according to an embodiment of this application. As shown in FIG. 2, one security group may be referenced by one or more hosts, and one or more security rules may be configured for one security group, one or more services deployed on each host can use a security rule in the security group to implement access control. A source address of the security rule may be an IP address of one or more hosts in the security group, or an IP address pool, or an IP address segment.

For example, FIG. 3 is a diagram of a security rule according to an embodiment of this application. As shown in FIG. 3, a security rule configured for a security group WebTierELB is to allow a host whose network segment is 0.0.0.0/0 to access a TCP 443 port. A security rule configured for a security group WebTier is to allow a host that references the security group WebTierELB to access a TCP 80 port. A security rule configured for a security group AppTierELB is to allow a host that references the security group WebTier to access a TCP 808 port. A security rule configured for a security group AppTier is to allow a host that references the security group WebTierELB to access a TCP 8080 port. A security rule configured for a security group DBTier is to allow a host that references the security group AppTier to access a TCP 3306 port.

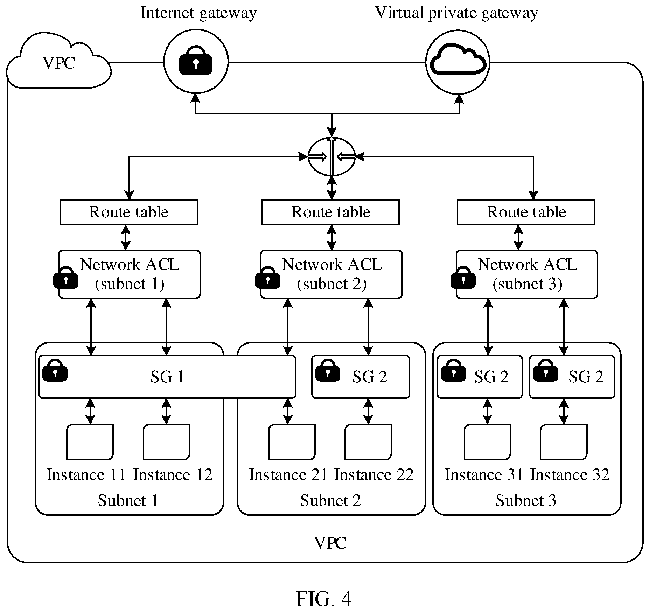

For example, FIG. 4 is a diagram of a service access control scenario according to an embodiment of this application. As shown in FIG. 4, a plurality of instances (instances) are deployed in one virtual private cloud (virtual private cloud, VPC). An internet gateway (internet gateway) and a virtual private gateway (virtual private gateway) are gateways between the VPC and the Internet. Traffic from the Internet may access a public service in the VPC through the internet gateway and a route table (route table). Traffic from the Internet may access a private service in the VPC through the virtual private gateway and the route table. The plurality of instances in the VPC can be grouped based on security or operation requirements, that is, allocated to different subnets (subnets). For example, a subnet 1 includes an instance 11 and an instance 12, a subnet 2 includes an instance 21 and an instance 22, and a subnet 3 includes an instance 31 and an instance 32. A user may use a network access control list (access control list, ACL) to control traffic entering and leaving at a subnet level. For example, a network ACL corresponding to the subnet 1 is used to control traffic entering and leaving the instance 11 and the instance 12, a network ACL of the subnet 2 is used to control traffic entering and leaving the instance 21 and the instance 22, and a network ACL of the subnet 3 is used to control traffic entering and leaving the instance 31 and the instance 32. The user may also use a security group to control traffic entering and leaving at a service level. In other words, the security group is used to define a security boundary of services deployed on the plurality of instances in the VPC, and a security rule is configured to implement access control of the services deployed on the plurality of instances in the VPC. For example, an SG 1 is used to define a security boundary of services deployed on the instance 11, the instance 12, and the instance 21, and a security rule of the SG 1 is configured to implement access control of the services deployed on the instance 11, the instance 12, and the instance 21. An SG 2 is used to define a security boundary of a service deployed on the instance 22, and a security rule of the SG 2 is configured to implement access control of the service deployed on the instance 22. An SG 3 is used to define a security boundary of services deployed on the instance 31 and the instance 32, and a security rule of the SG 3 is configured to implement access control of the services deployed on the instance 31 and the instance 32.

Because any security rule in a security group may allow one or more services deployed on one or more hosts that reference the security group to access a port, a source address of the security rule may be an IP address of the one or more hosts that reference the security group. If the hosts that reference the security group change, for example, a host that references the security group is newly added, a network controller configured to manage the services deployed on the hosts needs to send the security rule in the security group to the newly-added host, update the referenced security rule when determining that a source address of any security rule in the security group is the IP address of the one or more hosts that reference the security group, and send an updated security rule to the one or more hosts in the security group.

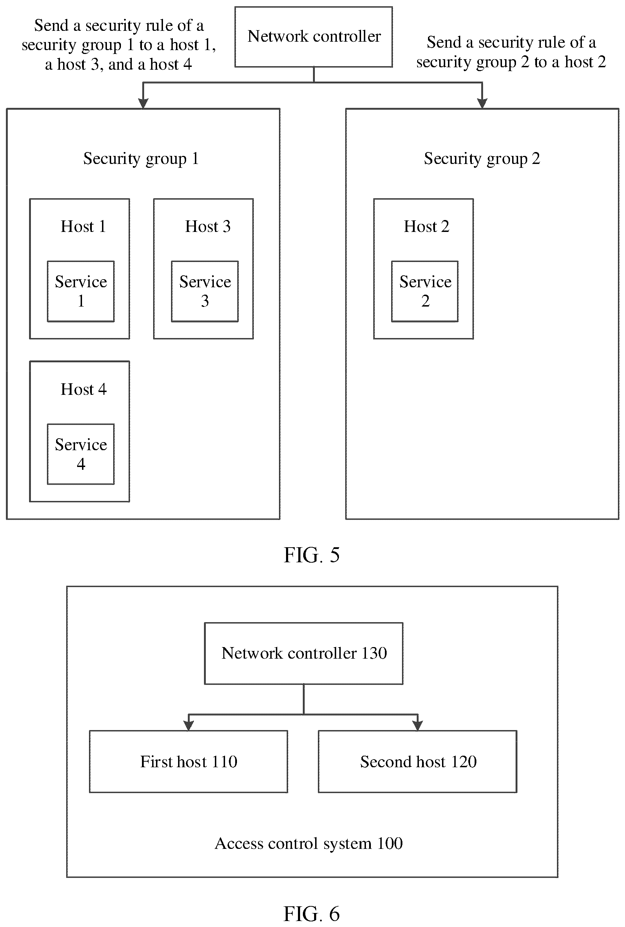

For example, FIG. 5 is a diagram of another service access control scenario according to an embodiment of this application. As shown in FIG. 5, a service 1 is deployed on a host 1, and a service 2 is deployed on a host 2. The host 1 references a security group 1, and the host 2 references a security group 2. In other words, a user uses the security group 1 to define a service boundary of the service 1, and uses the security group 2 to define a service boundary of the service 2. A network controller delivers a security rule in the security group 2 to the host 2. The security rule in the security group 2 is to allow a host that references the security group 1 to access the service 2. In other words, a source address of the security rule in the security group 2 is IP addresses of all hosts that reference the security group 1. When a service 3 is deployed on a host 3, a service 4 is deployed on a host 4, and the host 3 and the host 4 reference the security group 1, the host 3 and the host 4 that reference the security group 1 are newly added. The host 3 and the host 4 notify the network controller. The network controller receives notifications from the host 3 and the host 4, and updates the security rule in the security group 2. In other words, the network controller needs to deliver the security rule in the security group 1 to the host 3 and the host 4. In addition, because the source address of the security rule in the security group 2 is the IP addresses of all the hosts that reference the security group 1, the network controller further needs to update security rules of all the hosts that reference the security group 2.

It can be learned that, when a security group is used to define a security boundary of a service, and a security rule in which a source address is an IP address of one or more hosts in the security group is configured to implement service access control, if hosts that reference a security group frequently change, services that are classified into a same service set by referencing the security group frequently change, and security boundaries of the services frequently changes and are difficult to maintain. In addition, the source address of the security rule used by the services in the same service set frequently change. Consequently, a frequency of updating a security rule by a network controller is high, and pressure of the network controller is high.

To resolve problems that a security boundary of a service is difficult to maintain and a network controller updates a security rule at a high frequency, three solutions are currently proposed. The following provides examples for description.

Solution 1: A network segment address is used as a source address of a security rule, to loosen a control granularity of access control and reduce a frequency of updating the security rule. For example, a security group 1 is used to define a service boundary of a service 1. Hosts that reference the security group 1 include a host 1, a host 2, and a host 3. All intranet network segments (such as 192.168.0.0/16, 22.128.0.0/9, and 7.0.0.0/8) are added to an IP address pool A. A security rule in the security group 1 is to allow IP addresses in the IP address pool A to access a port monitored by service 1. When a host 5 and a host 6 that reference the security group 1 are newly added, because the IP address pool A includes all intranet IP addresses, a change of the hosts that reference the security group does not cause a network controller to update the security rule. However, a port of service 1 is open to the entire intranet, and service-level access control cannot be implemented.

Solution 2: A service network segment is used to replace a service security group. In other words, a network segment is used to define a security boundary of a service. Different services or microservices use different network segments to reduce a frequency of updating a security rule. If a network segment instead of an IP address is used as a source address of a security rule, an IP address of a host needs to be added to the network segment used by the service when the host is added to the service. In this way, a change of the host that references the security group does not cause a network controller to update the security rule. However, to replace the service security group with the service network segment, different network segments need to be planned for different services in advance and sufficient space for capacity expansion needs to be reserved in the network segment used by the service. As a result, addresses are wasted. In addition, if the host is in a VPC, an address of the host is irrelevant to a location, and the location of the host is not restricted by a location of the network segment. If the host is in a physical network, an address of the host is related to a location, and the location of the host is restricted by a location of the network segment. As a result, the host can be used only for specific services, causing resource waste.

Solution 3: An application-identity document (application-identity document, APP-ID) is used to replace an IP address as a source identifier and a destination identifier for access control of a service, and a security rule of the service is irrelevant to the IP address. An application-aware internet protocol version 6 network (application-aware IPv6 network, APN6) framework may use programmable space carried in an IPv6 packet to carry application information (identifiers and/or network performance requirements) into a network, to enable the network to sense the applications and the requirements, and provide refined network services and precise network operation and maintenance. The application-identity document is used to replace the IP address as the source identifier and the destination identifier of the access control of the service, so that a change of a host that references a security group does not cause a network controller to update the security rule. However, when the APN6 is used, a client and a server need to support an APN6 socket (socket). As a result, service reconstruction is difficult. In addition, an open source community does not have a mature APN6 protocol and cannot be promoted on a large scale.

In view of this, the technical solutions in embodiments of this application are provided. In embodiments of this application, when a first service on a first host accesses a second service on a second host, a source address of a packet sent by the first host to a first port on the second host may include an identifier of the first service, and a security rule of the second service that monitors the first port may include an identifier indicating that access to the second service is allowed, the second host may implement access control by determining whether the identifier of the first service matches the identifier indicating that access to the second service is allowed. A security boundary of a service is defined by using an identifier of a service instead of an IP address of a host. To be specific, same services deployed on different hosts may be classified into a same service set, and security rules of the services in the same service set are irrelevant to the IP address of the host. In this case, if a host on which a service is deployed changes, a security boundary of the service does not change, so that maintenance of the security boundary of the service can be simplified. In addition, a network controller does not need to update the security rule of the service, so that a frequency of updating the security rule is reduced, and implementation of the network controller is simplified.

The following describes technical features in embodiments of this application, to facilitate understanding of embodiments of this application.

The access control method provided in embodiments of this application may be applied to an access control system. For example, FIG. 6 is a diagram of a structure of an access control system according to an embodiment of this application. As shown in FIG. 6, the access control system 100 may include one or more hosts. In FIG. 6, two hosts, a first host 110 and a second host 120, are drawn as examples, and a network controller 130 may be further included.

The host may be a physical machine, for example, a server, or may be a virtual machine, for example, a cloud server. This is not specifically limited in embodiments of this application. The host can run one or more container groups. Each container group may include one or more containers (containers). For example, the container group may be a Pod in K8s. One or more services may be deployed on the host. Each service may be set or run in a container group. A service may also be referred to as a service application, and may implement independent service logic. A plurality of services may provide corresponding service functions based on a relationship of invoking or being invoked. For example, a first service is deployed on the first host 110, and a second service is deployed on the second host 120.

The network controller 130 is configured to manage one or more services deployed on the first host 110 and the second host 120, for example, configure a security rule of a service, update a security rule of a service, or manage an identifier (identifier, ID) of a service.

The foregoing describes an access control system provided in embodiments of this application. The following describes an access control method provided in embodiments of this application with reference to the accompanying drawings.

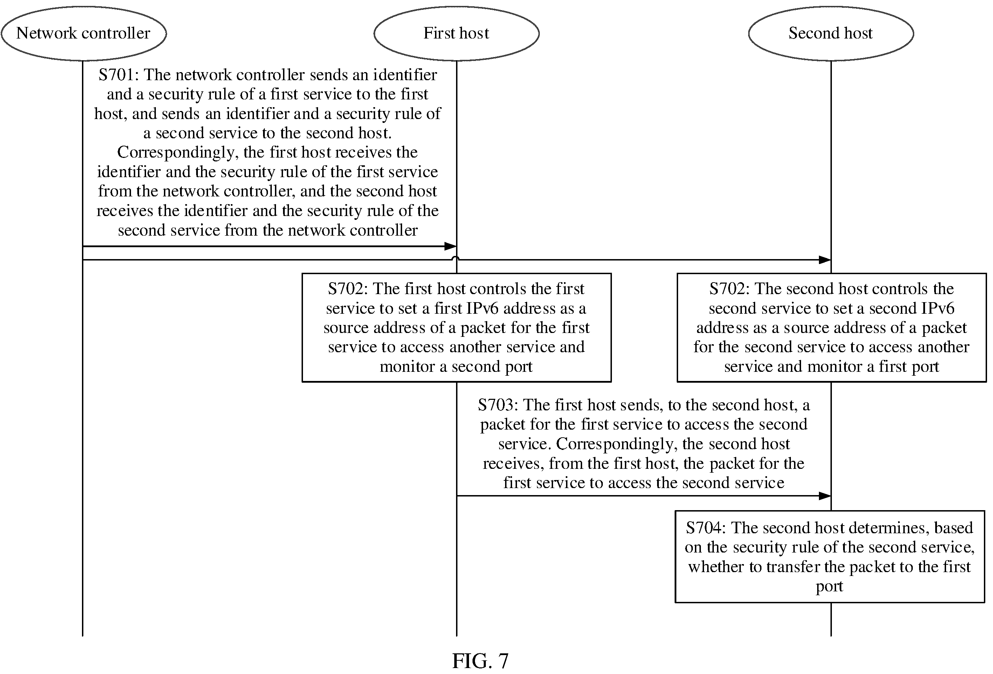

FIG. 7 is a schematic flowchart of an access control method according to an embodiment of this application. The access control method may be applied to the access control system shown in FIG. 6 or an access control system whose functional structure is similar to that of the access control system shown in FIG. 6. This is not specifically limited in embodiments of this application. A specific procedure of the access control method is described as follows. It should be understood that, in embodiments of this application, the method is described by using an example in which the access control system is used as an execution body for performing the method. As an example rather than a limitation, the execution body for performing the method may alternatively be a chip, a chip system, a processor, or the like that is used in the access control system.

S701: A network controller sends an identifier and a security rule of a first service to a first host, and sends an identifier and a security rule of a second service to a second host. Correspondingly, the first host receives the identifier and the security rule of the first service from the network controller, and the second host receives the identifier and the security rule of the second service from the network controller.

In some embodiments, after determining that the first host is to deploy the first service, the network controller may send the identifier and the security rule of the first service to the first host. The security rule of the first service may include an identifier (that is, an identifier of a source service) indicating that access to the first service is allowed, the identifier (that is, an identifier of a destination service) of the first service, and a port (that is, a destination port) monitored by the first service. Similarly, after determining that the second host is to deploy the second service, the network controller may further send the identifier and the security rule of the second service to the second host. The security rule of the second service may include an identifier (that is, an identifier of a source service) indicating that access to the second service is allowed, the identifier (that is, an identifier of a destination service) of the second service, and a port (that is, a destination port) monitored by the second service.

For example, as shown in Table 1, the security rule of the first service is to allow a service a to access a port B monitored by a service b, where the service a is the identifier indicating that access to the first service is allowed, the service b is the identifier of the first service, and the port 1 is the port monitored by the first service. The security rule of the second service is to allow a service c to access a port 2 monitored by a service d, where the service c is the identifier indicating that access to the second service is allowed, the service d is the identifier of the second service, and the port 2 is the port monitored by the second service.

**Table 1**

| Security rule | Identifier of a source service | Identifier of a destination service | Destination port |
|---|---|---|---|
| First service | Service a | Service b | Port 1 |
| Second service | Service c | Service d | Port 2 |

Correspondingly, the first host may receive the identifier and the security rule of the first service from the network controller, and deploy and start the first service. The second host may receive the identifier and the security rule of the second service from the network controller, and deploy and start the second service.

S702: The first host controls the first service to set a first IPv6 address as a source address of a packet for the first service to access another service and monitor a second port, and the second host controls the second service to set a second IPv6 address as a source address of a packet for the second service to access another service and monitor a first port.

In some embodiments, as shown in Table 2, after starting the first service, the first host may control the first service to set the first IPv6 address as the source address of the packet for the first service to access another service, and control the first service to monitor the second port on the first host. After starting the second service, the second host may control the second service to set the second IPv6 address as the source address of the packet for the second service to access another service, and control the second service to monitor the first port on the second host.

**Table 2**

| Host | Service | Source address | Listening port |
|---|---|---|---|
| First host | First service | First IPv6 address | Second port |
| Second host | Second service | Second IPv6 address | First port |

The first IPv6 address may include a prefix, location information, and host information. The prefix of the first IPv6 address is used to define a type of the first IPv6 address. The location information of the first IPv6 address is used to route a packet whose source address is the first IPv6 address. The host information of the first IPv6 address is used to distinguish whether the first host is a physical machine, a virtual machine, or a container. The host information of the first IPv6 address includes an identifier of the first host and the identifier of the first service. In addition, after the first service sets the first IPv6 address as the source address of the packet for the first service to access another service, the identifier that is of the first service and that is included in the first IPv6 address remains unchanged. Similarly, the second IPv6 address may include a prefix, location information, and host information. The prefix of the second IPv6 address is used to define a type of the second IPv6 address. The location information of the second IPv6 address is used to route a packet whose source address is the second IPv6 address. The host information of the second IPv6 address is used to distinguish whether the second host is a physical machine, a virtual machine, or a container. The host information of the second IPv6 address includes an identifier of the second host and the identifier of the second service. In addition, after the first service sets the second IPv6 address as the source address of the packet for the first service to access another service, the identifier of the first service included in the second IPv6 address remains unchanged.

Specifically, in the first IPv6 address or the second IPv6 address, the location information may be located after the prefix. In other words, the prefix is located at a high bit, and the location information is located at a low bit. For example, the prefix is located at a 1^{st} bit to a 36^{th} bit in the first IPv6 address or the second IPv6 address, and the location information is located at a 37^{th} bit to an 80^{th} bit in the first IPv6 address or the second IPv6 address.

In the first IPv6 address or the second IPv6 address, the host information may be located after the location information. In other words, the location information is located at a high bit, and the host information is located at a low bit. For example, the location information is located at the 37^{th} bit to the 80^{th} bit in the first IPv6 address or the second IPv6 address, and the host information is located at an 81^{st} bit to a 128^{th} bit in the first IPv6 address or the second IPv6 address.

In the host information of the first IPv6 address, the identifier of the first service may be located after the identifier of the first host. In other words, the identifier of the first host is located at a high bit, and the identifier of the first service is located at a low bit. For example, the identifier of the first host is located at the 81^{st} bit to a 104^{th} bit in the first IPv6 address, and the identifier of the first service is located at a 105^{th} bit to a 120^{th} bit in the first IPv6 address. Similarly, in the host information of the second IPv6 address, the identifier of the second service may be located after the identifier of the second host. In other words, the identifier of the second host is located at a high bit, and the identifier of the second service is located at a low bit. For example, the identifier of the second host is located at the 81^{st} bit to the 104^{th} bit in the second IPv6 address, and the identifier of the second service is located at the 105^{th} bit to the 120^{th} bit in the second IPv6 address.

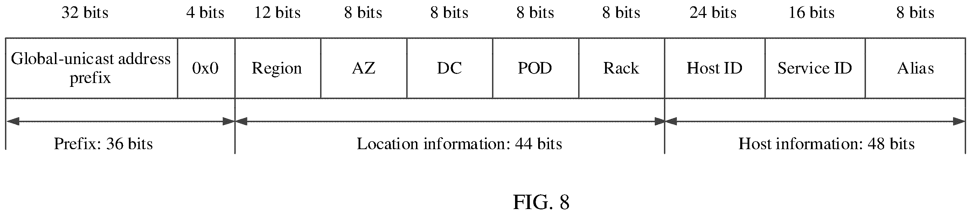

For example, FIG. 8 is a diagram of a first IPv6 address according to an embodiment of this application. As shown in FIG. 8, a first host that deploys and starts a first service is a physical machine, and an identifier of the first service is added to host information of an IPv6 address of the first host to obtain the first IPv6 address. The first IPv6 address includes a 36-bit (bits) prefix, 44-bit location information, and 48-bit host information. The prefix includes a 32-bit global-unicast address (global-unicast address, GUA) prefix (prefix) and a 4-bit tunnel (tunnel) ID 0x0. The location information includes a 12-bit region (region), an 8-bit availability zone (availability zone, AZ), an 8-bit data center (data center, DC), an 8-bit point of delivery (point of delivery, POD), and an 8-bit rack (rack). The host information includes a 24-bit host ID (that is, the identifier of the first host), a 16-bit service ID (that is, the identifier of the first service), and an 8-bit alias.

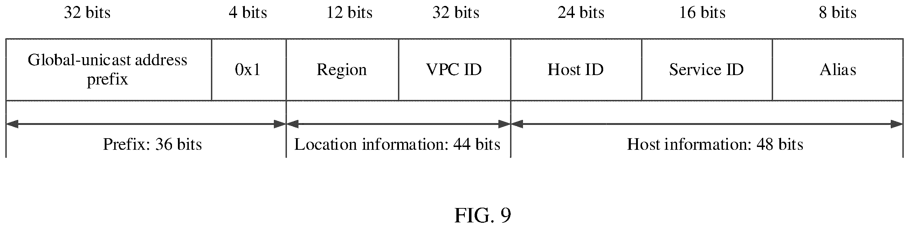

FIG. 9 is a diagram of another first IPv6 address according to an embodiment of this application. As shown in FIG. 9, a first host that deploys and starts a first service is a virtual machine, and an identifier of the first service is added to host information of an IPv6 address of the first host to obtain the first IPv6 address. The first IPv6 address includes a 36-bit prefix, 44-bit location information, and 48-bit host information. The prefix includes a 32-bit GUA prefix and a 4-bit tunnel ID 0x1. The location information includes a 12-bit region and a 32-bit VPC ID. The host information includes a 24-bit host ID (that is, the identifier of the first host), a 16-bit service ID (that is, the identifier of the first service), and an 8-bit alias.

In addition, if the first host also deploys and starts a second service, after starting the second service, the first host may control the second service to set a third IPv6 address as a source address of a packet for the second service to access another service, and control the second service to monitor a second port on the first host, where the third IPv6 address may be an IPv6 address of the first host including an identifier of the second service. It can be learned that, if a plurality of services are deployed on a host, because different services set different addresses as source addresses of packets for accessing other services, different services monitor a same port, and no conflict occurs. For example, both the first service on the first host and the second service on the first host may monitor the first port on the first host. In addition, the source addresses of the packets that are set by different services and that are sent by the services have different service identifiers, but may have a same network segment, so that resource utilization is improved.

S703: The first host sends, to the second host, a packet for the first service to access the second service. Correspondingly, the second host receives, from the first host, the packet for the first service to access the second service.

In some embodiments, when the first service accesses the first port monitored by the second service, the first host may send, to the second host through the second port monitored by the first service, the packet for the first service to access the second service. Correspondingly, the second host receives, from the first host, the packet for the first service to access the second service. A source address of the packet is the first IPv6 address set by the first service, and a destination port is the first port monitored by the second service.

S704: The second host determines, based on the security rule of the second service, whether to transfer the packet to the first port.

In some embodiments, after the second host receives, from the first host, the packet for the first service to access the second service, because the source address of the packet is the first IPv6 address set by the first service, the first IPv6 address includes the identifier of the first service, and the destination port is the first port monitored by the first service, whether to transfer the packet to the first port may be determined based on the security rule of the second service. If the identifier that is of the first service and that is included in the first IPv6 address matches the identifier that is included in the security rule of the second service and indicating that access to the second service is allowed, the second host may transfer the packet to the first port. If the identifier that is of the first service and that is included in the first IPv6 address does not match the identifier that is included in the security rule of the second service and indicating that access to the second service is allowed, the second host may not transfer the packet to the first port.

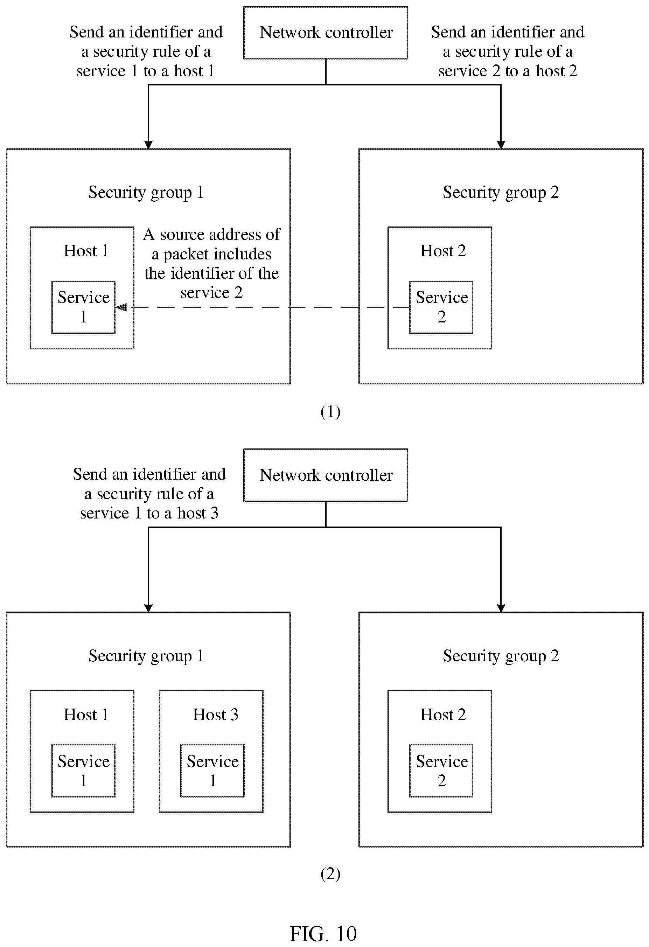

For example, FIG. 10 is a diagram of still another service access control scenario according to an embodiment of this application.

As shown in (1) in FIG. 10, when a host 1 is to deploy a service 1, and a host 2 is to deploy a service 2, the host 1 may reference a security group 1, and the host 2 may reference a security group 2. In other words, a user uses the security group 1 to define a service boundary of the service 1, and uses the security group 2 to define a service boundary of the service 2. To be specific, if the service 1 is deployed on a host, the host references the security group 1, and if the service 2 is deployed on a host, the host references the security group 2.

A network controller may deliver an identifier of the service 1 and a security rule of the service 1 (that is, the security rule in the security group 1) to the host 1, and deliver an identifier of the service 2 and a security rule of the service 2 (that is, the security rule in the security group 1) to the host 2. The security rule of the service 1 includes an identifier indicating that access to the service 1 is allowed, and the security rule of the service 2 includes an identifier indicating that access to the service 2 is allowed.

The host 1 may receive the identifier of the service 1 and the security rule of the service 1 from the network controller, and deploy and start the service 1. After starting the service 1, the host 1 may further control the service 1 to set an address 1 as a source address of a packet sent by the service 1, and control the service 1 to monitor a port 1. The address 1 set by the service 1 is obtained by adding the identifier of the service 1 to the IPv6 address of the host 1. The host 2 may receive the identifier of the service 2 and the security rule of the service 2 from the network controller, and deploy and start the service 2. After starting the service 2, the host 2 may further control the service 2 to set an address 2 as a source address of a packet sent by the service 2, and control the service 2 to monitor a port 2. The address 2 set by the service 2 is obtained by adding the identifier of the service 2 to the IPv6 address of the host 2.

When the service 2 accesses the service 1, the host 2 may send a packet to the host 1 through the port 2 monitored by the service 2. The host 1 may receive the packet that is from the host 2 and that is for the service 2 to access the service 1, obtain the identifier of the service 2 from a source address of the packet, and then match the identifier that is included in the security rule of the service 1 and indicating that access the service 1 is allowed. If the two identifiers match, the packet is transferred to the port 2 monitored by the service 2, or if the two identifiers do not match, the packet is not transferred to port 2 monitored by the service 2 to implement access control of the service 1.

As shown in (2) in FIG. 10, a host 3 is to deploy a service 1, that is, the host 3 that references a security group 1 is newly added. Because a security rule of the service 1 is related only to an identifier of the service 1, and is irrelevant to an IP address of the host on which the service 1 is deployed, that is, a security rule in the security group 1 is related only to the identifier of the service 1, and is irrelevant to IP addresses of all hosts that reference the security group 1, a network controller does not need to update the security rule of the service 1, and only need to send the security rule of the service 1 to the host 3.

It can be learned that, when a first service on a first host accesses a second service on a second host, a source address of a packet sent by the first host to a first port on the second host may include an identifier of the first service, and a security rule of the second service that monitors the first port may include an identifier indicating that access to the second service is allowed, the second host may implement access control by determining whether the identifier of the first service matches the identifier indicating that access to the second service is allowed. A security boundary of a service is defined by using an identifier of a service instead of an IP address of a host. To be specific, same services deployed on different hosts may be classified into a same service set, and security rules of the services in the same service set are irrelevant to the IP address of the host. In this case, if a host on which a service is deployed changes, a security boundary of the service does not change, so that maintenance of the security boundary of the service can be simplified. In addition, a network controller does not need to update the security rule of the service, so that a frequency of updating the security rule is reduced, and implementation of the network controller is simplified.

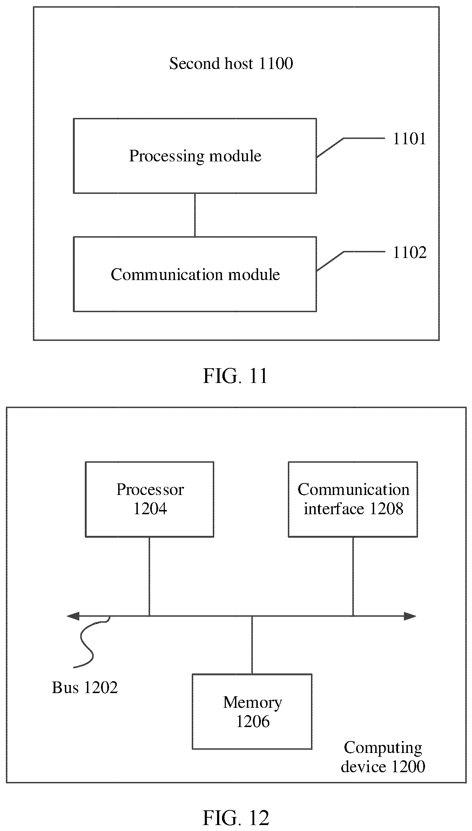

Based on the foregoing embodiments, an embodiment of this application further provides a second host. FIG. 11 is a diagram of a structure of a second host according to an embodiment of this application. The second host is configured to implement the access control methods shown in FIG. 7 to FIG. 10. The second host 1100 in FIG. 11 may include a processing module 1101 and a communication module 1102.

The processing module 1101 is configured to deploy and start a second service, and control the second service to monitor a first port.

The communication module 1102 is configured to receive a packet that is from a first host and that is for a first service to access the second service, where a source address of the packet is a first internet protocol version 6 IPv6 address and a destination port is the first port, the first IPv6 address includes a prefix, location information, and first host information, the prefix is used to define a type of the first IPv6 address, the location information is used to route the packet, and the first host information includes an identifier of the first host and an identifier of the first service.

The processing module 1101 is further configured to: determine that the identifier that is of the first service and that is included in the first IPv6 address matches a security rule of the second service, and transfer the packet to the first port, where the security rule of the second service includes an identifier indicating that access to the second service is allowed.

In a possible design, in the first IPv6 address, the location information is located after the prefix.

In a possible design, the location information is from a 37^{th} bit to an 80^{th} bit.

In a possible design, in the first IPv6 address, the first host information is located after the location information.

In a possible design, the host information is from an 81^{st} bit to a 128^{th} bit.

In a possible design, in the host information, the identifier of the first service is located after the identifier of the first host.

In a possible design, the identifier of the first host is from the 8 1^{st} bit to a 104^{th} bit, and the identifier of the first service is from a 105^{th} bit to a 120^{th} bit.

In a possible design, before deploying and starting the second service, the communication module 1102 is further configured to receive an identifier of the second service and the security rule of the second service from a network controller, where the network controller is configured to manage a service deployed on the first host and a service deployed on the second host.

In a possible design, after deploying and starting the second service, the processing module 1101 is further configured to control the second service to set a second IPv6 address as a source address of a packet for the second service to access another service, where the second IPv6 address includes a prefix, location information, and second host information, and the second host information includes an identifier of the second host and the identifier of the second service.

Based on the foregoing embodiments, an embodiment of this application further provides a computing device. FIG. 12 is a diagram of a structure of a computing device according to an embodiment of this application. The computing device 1200 includes a bus 1202, a processor 1204, a memory 1206, and a communication interface 1208. The processor 1204, the memory 1206, and the communication interface 1208 communicate with each other through the bus 1202. The computing device 1200 may be a first host, a second host, or a network controller. It should be understood that quantities of processors and memories in the computing device 1200 are not limited in this application.

The bus 1202 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. To facilitate representation, the bus is represented by using only one line in FIG. 12, but it does not indicate that there is only one bus or one type of buses. The bus 1202 may include a path for transmitting information between components (for example, the memory 1206, the processor 1204, and the communication interface 1208) of the computing device 1200.

The processor 1204 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1206 may include a volatile memory (volatile memory), for example, a random access memory (random access memory, RAM).

The processor 1204 may further include a non-volatile memory (non-volatile memory), such as a read-only memory (read-only memory, ROM), a flash memory, a hard disk drive (hard disk drive, HDD), or a solid state drive (solid state drive, SSD).

The memory 1206 stores executable program code, and the processor 1204 executes the executable program code to separately implement functions of the communication module and the processing module, to implement the methods shown in FIG. 7 to FIG. 10. In other words, the memory 1206 stores instructions used to perform the methods shown in FIG. 7 to FIG. 10.

The communication interface 1208 uses a transceiver module, for example, but not limited to, a network interface card or a transceiver, to implement communication between the computing device 1200 and another device or a communication network.

Based on the foregoing embodiments, an embodiment of this application further provides a computing device cluster. The computing device cluster includes at least one computing device. The computing device may be a first host, a second host, or a network controller.

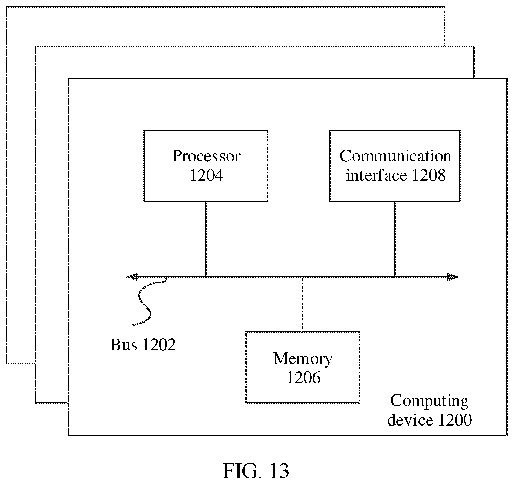

As shown in FIG. 13, the computing device cluster includes at least one computing device 1200. Memories 1206 in one or more computing devices 1200 in the computing device cluster may store same instructions used to perform the methods shown in FIG. 7 to FIG. 10.

In some possible implementations, the memories 1206 of the one or more computing devices 1200 in the computing device cluster may alternatively separately store some instructions used to perform the methods shown in FIG. 7 to FIG. 10. In other words, a combination of the one or more computing devices 1200 may jointly execute the instructions used to perform the methods shown in FIG. 7 to FIG. 10.

It should be noted that memories 1206 in different computing devices 1200 in the computing device cluster may store different instructions respectively used for performing some functions of the first host. In other words, the instructions stored in the memories 1206 in the different computing devices 1200 may implement functions of one or more of a communication module and a processing module.

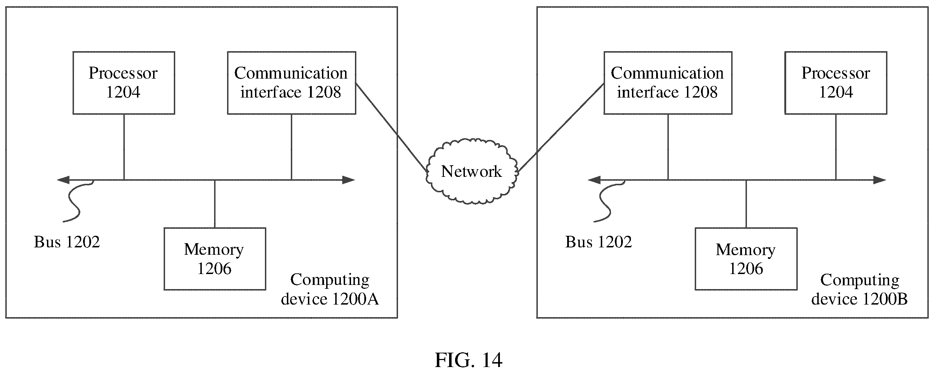

In some possible implementations, the one or more computing devices in the computing device cluster may be connected through a network. The network may be a wide area network, a local area network, or the like. FIG. 14 shows a possible implementation. As shown in FIG. 14, two computing devices 1200A and 1200B are connected through a network. Specifically, each computing device is connected to the network through a communication interface of the computing device. In this type of possible implementation, a memory 1206 in the computing device 1200A stores instructions used to perform functions of a communication module. In addition, a memory 1206 in the computing device 1200B stores instructions used to perform functions of a processing module.

It should be understood that functions of the computing device 1200A shown in FIG. 14 may alternatively be completed by a plurality of computing devices 1200. Similarly, functions of the computing device 1200B may alternatively be completed by a plurality of computing devices 1200.

Based on the foregoing embodiments, an embodiment of this application further provides a computer-readable storage medium. The computer-readable storage medium may be any usable medium that can be stored by a computing device or a data storage device such as a data center that includes one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the methods shown in FIG. 7 to FIG. 10.

Based on the foregoing embodiments, an embodiment of this application further provides a computer program product including instructions. The computer program product may be software or a program product that includes instructions and that can run on a computing device or that is stored in any available medium. When the computer program product runs on at least one computing device, the at least one computing device is enabled to perform the methods shown in FIG. 7 to FIG. 10.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. An access control system, wherein the access control system comprises a first host and a second host, wherein
the first host is configured to: deploy and start a first service, and send, to the second host, a packet for the first service to access a second service, wherein a source address of the packet is a first internet protocol version 6 IPv6 address and a destination port is a first port on the second host, the first IPv6 address comprises a prefix, location information, and host information, the prefix is used to define a type of the first IPv6 address, the location information is used to route the packet, and the host information comprises an identifier of the first host and an identifier of the first service;
the second host is configured to: deploy and start the second service, and control the second service to monitor the first port; and
the second host is further configured to: receive the packet from the first host, determine that the identifier that is of the first service and that is comprised in the first IPv6 address matches a security rule of the second service, and transfer the packet to the first port, wherein the security rule of the second service comprises an identifier indicating that access to the second service is allowed.

2. The system according to claim 1, wherein in the first IPv6 address, the location information is located after the prefix.

3. The system according to claim 2, wherein the location information is from a 37^{th} bit to an 80^{th} bit.

4. The system according to any one of claims 1 to 3, wherein in the first IPv6 address, the host information is located after the location information.

5. The system according to claim 4, wherein the host information is from an 81^{st} bit to a 128^{th} bit.

6. The system according to any one of claims 1 to 5, wherein in the host information, the identifier of the first service is located after the identifier of the first host.

7. The system according to claim 6, wherein the identifier of the first host is from the 81^{st} bit to a 104^{th} bit, and the identifier of the first service is from a 105^{th} bit to a 120^{th} bit.

8. The system according to any one of claims 1 to 7, wherein
the first host is further configured to: before deploying and starting the first service, receive the identifier of the first service and a security rule of the first service from a network controller, wherein the network controller is configured to manage a service deployed on the first host and a service deployed on the second host, and the security rule of the first service comprises an identifier indicating that access to the first service is allowed.

9. The system according to any one of claims 1 to 7, wherein
the second host is further configured to: before deploying and starting the second service, receive an identifier of the second service and the security rule of the second service from a network controller, wherein the network controller is configured to manage a service deployed on the first host and a service deployed on the second host.

10. The system according to any one of claims 1 to 9, wherein the first host is configured to send, to the second host in the following manner, the packet for the first service to access the second service:
controlling the first service to set the first IPv6 address as the source address of the packet, controlling the first service to monitor a second port, and sending the packet to the second host through the second port.

11. An access control method, comprising:
deploying and starting, by a second host, a second service, and controlling the second service to monitor a first port;
receiving, by the second host, a packet that is from a first host and that is for a first service to access the second service, wherein a source address of the packet is a first internet protocol version 6 IPv6 address and a destination port is the first port, the first IPv6 address comprises a prefix, location information, and first host information, the prefix is used to define a type of the first IPv6 address, the location information is used to route the packet, and the first host information comprises an identifier of the first host and an identifier of the first service; and
determining, by the second host, that the identifier that is of the first service and that is comprised in the first IPv6 address matches a security rule of the second service, and transferring the packet to the first port, wherein the security rule of the second service comprises an identifier indicating that access to the second service is allowed.

12. The method according to claim 11, wherein in the first IPv6 address, the location information is located after the prefix.

13. The method according to claim 12, wherein the location information is from a 37^{th} bit to an 80^{th} bit.

14. The method according to any one of claims 11 to 13, wherein in the first IPv6 address, the first host information is located after the location information.

15. The method according to claim 14, wherein the host information is from an 81^{st} bit to a 128^{th} bit.

16. The method according to any one of claims 11 to 15, wherein in the host information, the identifier of the first service is located after the identifier of the first host.

17. The method according to claim 16, wherein the identifier of the first host is from the 81^{st} bit to a 104^{th} bit, and the identifier of the first service is from a 105^{th} bit to a 120^{th} bit.

18. The method according to any one of claims 11 to 17, wherein before deploying and starting the second service, the method further comprises:
receiving, by the second host, an identifier of the second service and the security rule of the second service from a network controller, wherein the network controller is configured to manage a service deployed on the first host and a service deployed on the second host.

19. The method according to any one of claims 11 to 18, wherein after deploying and starting the second service, the method further comprises:
controlling, by the second host, the second service to set a second IPv6 address as a source address of a packet for the second service to access another service, wherein the second IPv6 address comprises a prefix, location information, and second host information, and the second host information comprises an identifier of the second host and the identifier of the second service.

20. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 11 to 19.

21. A computer-readable storage medium, comprising computer program instructions, wherein when the computer program instructions are executed by a computing device cluster, the computing device cluster is enabled to perform the method according to any one of claims 11 to 19.

22. A computer program product comprising instructions, wherein when the instructions are run by a computing device cluster, the computing device cluster is enabled to perform the method according to any one of claims 11 to 19.
